# EUROPÄISCHE PATENTANMELDUNG

(11) **EP 1 530 275 A2**
(43) Veröffentlichungstag der Anmeldung: **11.05.2005**
(21) Anmeldenummer: 04024948.4
(22) Anmeldetag: 20.10.2004
(51) Int. Cl.: H02G 3/08

(54) **Kabeldurchführung**

(30) Priorität: 20.10.2003 DE 20316059 U
(71) Anmelder: ASM Automation Sensorik Messtechnik GmbH, 85452 Moosinning (DE)
(72) Erfinder: Steinich, Klaus Manfred, 85604 Zorneding/Pöring (DE)
(74) Vertreter: Alber, Norbert, Dipl.-Ing.

(57) **Zusammenfassung**

Die Erfindung betrifft eine zugentlastete Durchführung eines elektrischen Kabels durch ein festes Bauteil, beispielsweise einem Gehäuseteil, insbesondere einen Gehäusedeckel, die einfach und kostengünstig herzustellen und zu montieren ist, mit einem elektrischen Kabel (1), einer Durchlassbuchse (9) mit einem Durchlass (9a) für das Kabel (1), wobei der Durchlass (9a) ein Innengewinde (8) aufweist und das Kabel (1) einen solchen Außendurchmesser (5) aufweist, dass die Gewindegänge (7) des Innengewindes (8) in dem in das Innengewinde (8) eingeschraubten Zustand des Kabels (1) sich formschlüssig in den Außenumfang dessen Isolierung (3) einpressen.

## Beschreibung

### I. Anwendungsgebiet

Die Erfindung betrifft eine zugentlastete Durchführung eines elektrischen Kabels durch ein festes Bauteil, beispielsweise einem Gehäuseteil, insbesondere einen Gehäusedeckel.

### II. Technischer Hintergrund

Da die elektrische Kontaktierung der Adern eines Kabels mit dem anzuschließenden Bauteil, beispielsweise einer Elektronik-Platine, in der Regel keine mechanischen größeren Kräfte aufnehmen kann, ist bei elektrischen Anschlusskabeln sehr häufig eine sog. Zugentlastung notwendig. Dadurch soll vermieden werden, dass bei einem zu starken Anziehen des Kabels die elektrische Verbindung zwischen Kabel und dem Rest des elektrischen Gerätes abreißt.

Zu diesem Zweck ist das Kabel meist an der Stelle des Durchganges durch das Gehäuseteil mechanisch fest mit diesem verbunden, beispielsweise mittels einer festziehbaren Klemmschiene auf einem Untergrund wie etwa dem Gehäuseteil verklemmt. Derartige Zugentlastungen benötigen zusätzlichen Bauraum und im beschriebenen Fall ein Festziehen von mindestens zwei Schrauben während der Montage.

Eine andere übliche Zugentlastung ist das Hindurchführen eines Kabels durch den Durchlass einer Durchlassbuchse, die auf ihrem Außenumfang ein Außengewinde aufweist. Eine vor dem Hindurchführen des Kabels auf das Kabel aufgefädelte Überwurfmutter mit Innengewinde, welches auf das Außengewinde passt und ebenfalls einen Durchlass für das Kabel besitzt, kann nach Durchführen des Kabels auf die Durchlassbuchse aufgeschraubt werden. Dadurch wird deren freier Innenquerschnitt zusammengepresst aufgrund einer konischen Gestaltung entweder dieses Innendurchmessers und/oder des Gewindes.

Allerdings ist die Herstellung einer solchen Durchgangsbuchse aufgrund der Konizität aufwendig, und es wird ein zusätzliches Bauteil in Form der Überwurfmutter benötigt, und beim Zusammenbauen darf das vorherige Auffädeln der Überwurfmutter auf das Kabel nicht vergessen werden, da sonst Mehrarbeit entsteht.

### III. Darstellung der Erfindung

### a) Technische Aufgabe

Es ist daher die Aufgabe gemäß der Erfindung, eine Zugentlastung zu schaffen, die einfach und kostengünstig herzustellen und zu montieren ist.

### b) Lösung der Aufgabe

Diese Aufgabe ist durch die Merkmale des Anspruchs 1 gelöst. Vorteilhafte Ausführungsformen ergeben sich aus den Unteransprüchen.

Sofern der Außendurchmesser des Kabels im entlasteten Zustand größer ist als der freie Durchlass des Innengewindes des Durchlasses, pressen sich die Gewindegänge des Innengewindes in den Außenumfang der Isolierung, also den Außenumfang des Kabels, ein, sobald das Kabel sich im axialen Längenbereich des Gewindes befindet.

Auf diese Art und Weise wird eine axialfeste Verbindung zwischen Kabel und Durchlassbuchse und somit eine Zugentlastung geboten.

Hierfür muss auf der einen Seite sichergestellt sein, dass die Isolierung des Kabels dick genug ist, so dass die sich in den Außenumfang einpressenden Gewindegänge nicht die Adern im Inneren der Isolierung erreichen und beschädigen können.

Auf der anderen Seite darf der Außendurchmesser des Kabels nicht so groß sein, dass sein Einbringen in den Axialbereich des Innengewindes einen zu großen Kraftaufwand erfordert, beispielsweise indem der Außendurchmesser des Kabels im entlasteten Zustand wesentlich größer ist als der Nenndurchmesser des Gewindes, also der Durchmesser gemessen zwischen den Vertiefungen der Gewindegänge.

Das Kabel kann in den axialen Längenbereich des Innengewindes eingebracht werden durch axiales Vorwärtsschieben, was jedoch relativ großen Kraftaufwand erfordert.

Eine weniger schnelle, jedoch zuverlässigere Einbringungsart ist das Aufschrauben der Durchlassbuchse mit dem Innengewinde des Durchlasses auf den Außendurchmesser des Kabels, also dessen Isolierung.

Vor allem wenn die Gewindegänge dabei ausreichend spitz ausgebildet sind, dass sie sich in den Kunststoff der Isolierung des Kabels einschneiden, wird eine besonders axialfeste Verbindung zwischen den beiden Teilen geboten.

Die Zugbelastbarkeit dieser Verbindung hängt neben der Art der Isolierung, in der Regel eines Kunststoffes, und dessen absoluter Reißfestigkeit von der Vorspannung der Isolierung in radialer Richtung ab. Vorzugsweise ist deshalb der Außendurchmesser des Kabels im Ausgangszustand etwas größer als der Nenndurchmesser des Innengewindes.

Damit der in Einschraubrichtung erste Gang des Innengewindes die Isolierung des Kabels dennoch ohne zu großen Kraftaufwand ergreift, sind mehrere Möglichkeiten vorstehend geboten:

Entweder ist der Durchlass einschließlich des Innengewindes, also auch der Nenndurchmesser des Innengewindes, konisch sich verengend in Einschraubrichtung des Kabels ausgebildet. In diesem Fall ist der Außendurchmesser des Kabels im Ausgangszustand kleiner als der Nenndurchmesser des Gewindes am weiten Ende, jedoch größer als der Nenndurchmesser am schmalen Ende.

Eine andere Lösung besteht darin, den Nenndurchmesser des Gewindes unverändert zu lassen, jedoch an den ersten Gewindegängen in Einschraubrichtung die Höhe der Gewindegänge geringer auszubilden und im Laufe der ersten Gewindegänge auf die volle Gewindehöhe zu bringen.

Beide Möglichkeiten sind kostenaufwendig, da sie mit den standardisierten, kostengünstigen Herstellungsverfahren für Gewinde schwer vereinbar sind.

Eine dritte Möglichkeit besteht darin, das Innengewinde und auch den Durchlass im Bereich des Innengewindes nicht konisch auszubilden, jedoch in Einschubrichtung des Kabels vorgelagert dem Innengewinde einen Zuführstutzen in Form einer Verlängerung des Durchlasses koaxial zum Innengewinde vorzuschalten, und den Innendurchmesser dieses Zuführstutzens konisch auszubilden mit einer Verengung zum Innengewinde hin.

Der freie Durchmesser des Zuführstutzens entspricht an dem den Innengewinde zugewandten Ende dann vorzugsweise etwa dem Nenndurchmesser des Innengewindes.

Sofern es sich bei dem elektrischen Kabel um ein Kabel mit Abschirmung, also einem Geflecht aus Metallfäden in der Isolierung koaxial zwischen dem Außenumfang des Kabels und den Adern im Inneren des Kabels, handelt, wird vor dem Einbringen in den Durchlass der Durchlassbuchse für einen axialen Endbereich des Kabels dessen Isolierung entfernt, so dass also die Adern des Kabels um diese Länge über die entfernte Isolierung axial vorstehen. Dabei wird die Abschirmung nicht zusammen mit der Isolierung entfernt, sondern lang belassen, also entsprechend der Ablängung der Adern gekappt und vor dem Einbringen, also Einschrauben oder Einschieben der Isolierung des Kabels in das Innengewinde des Durchlasses nach hinten auf den Außendurchmesser der Isolierung umgestülpt wird.

Wenn dann das Kabel nur so weit in den Durchlass eingebracht wird, dass die Isolierung des Kabels kaum oder nur wenig über den axialen Bereich des Innengewindes vorsteht, und die Abschirmung mindestens mit einem Überstand über die Isolierung entsprechend der axialen Länge des Innengewindes umgestülpt wurde, befinden sich die Fäden bzw. das Geflecht der Abschirmung zwischen dem Außenumfang des Isolierung des Kabels und dem Innengewinde des Durchlasses und damit in elektrisch leitendem Kontakt mit dem Innengewinde.

Sofern die Durchlassbuchse aus elektrisch leitfähigem Material, etwa Metall, besteht, wird hierdurch die Abschirmung in elektrischen Kontakt mit der Durchlassbuchse und damit mit dem Gehäuse des anzuschließenden elektrischen Gerätes gebracht.

Damit wird eine zuverlässige dichte EMV-Abschirmung des Kabels gewährleistet und zum anderen die Zugentlastung positiv beeinflusst, da die in axialer Richtung entlang des Innengewindes verlaufenden metallenen Fasern der Abschirmung die Zugbelastbarkeit der Verbindungen zusätzlich erhöhen.

Zusätzlich kann die Zugbelastbarkeit des Kabels verbessert werden, vor allem wenn es eine Abschirmung besitzt, indem die Abschirmung auf der Stirnseite der Isolierung vorsteht und nicht abgeschnitten ist, und wenigstens die Abschirmung, besser auch die Isolierung des Kabels, in dem Gehäuse mit vergossen wird, in welches das Kabel eintritt. Durch die vielen einzelnen Drähte bzw. Fasern der Abschirmung, die meist auch noch geflechtartig oder gewebeartig angeordnet sind, ergibt sich eine sehr stark formschlüssige und damit hoch belastbare Verbindung der ausgehärteten Vergussmasse mit der Abschirmung, und damit eine zusätzliche verbesserte Zugbelastbarkeit.

### c) Ausführungsbeispiele

Eine Ausführungsform gemäß der Erfindung ist im Folgenden anhand der Figuren beispielhaft näher beschrieben. Es zeigen:
- Fig. 1:: einen Querschnitt durch eine erste erfindungsgemäße Zugentlastung, bei der nur im rechten Bildteil sich das Kabel bereits in der Durchlassbuchse befindet,
- Fig. 2:: eine zweite Ausführungsform und
- Fig. 3:: eine dritte Ausführungsform.

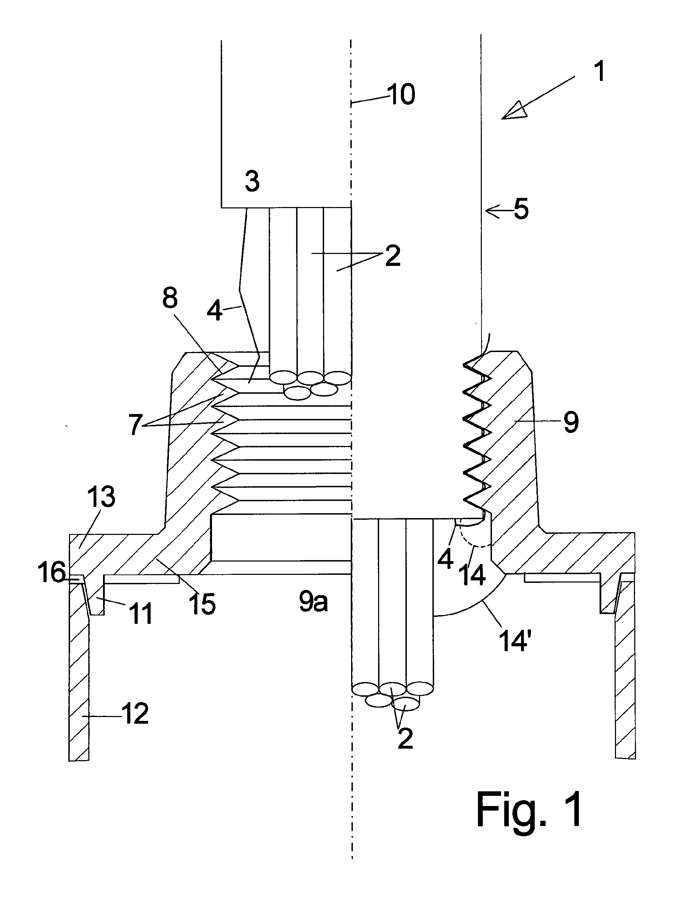

Fig. 1 zeigt den Kabeldurchlass in der linken Bildhälfte vor der Herstellung, in der rechten Bildhälfte im fertig gestellten Zustand, also nachdem das Kabel 1 sich mit seiner Isolierung 3 im axialen Längenbereich des Innengewindes 7 befindet, in einem Längsschnitt.

Dabei ist die Durchlassbuchse 9 mit dem Innengewinde 8, welches in der Regel einen rotationssymmetrischen, runden Querschnitt besitzt, wobei die Durchlassbuchse 9 einstückiger Bestandteil eines Deckels 15 sein kann, der z. B. auf ein Profil 12 oder ein Gehäuse aufgesetzt ist.

Die Durchlassbuchse 9 erstreckt sich dabei von der Hauptebene des Deckels 15 aus in die eine Richtung, während in die andere Richtung beispielsweise Führungsfortsätze 11 abstreben, die ein passgenaues Aufsetzen des Deckels 15 auf das angrenzende Bauteil erleichtern um anschließend die Verschraubung 13 durch den Deckel hindurch gegen das Profil 12 zu ermöglichen, vorzugsweise unter Zwischenlegung einer z. B. Flach-Dichtung 16.

Im Inneren des Profiles 12 sollen die Adern 2, die aus der Isolierung 3 des Kabels 1, die in Längsrichtung 10 über dessen im Endbereich entfernte Isolierung 3 ausreichend vorstehen, mit einer elektrischen Baueinheit im Inneren des z. B. Profiles 12 verbunden werden.

Wie Fig. 1 zeigt ist der Außendurchmesser 5 des Kabels 1 im Ausgangszustand etwa so groß wie der Nenndurchmesser N des Innengewindes 8. Das Kabel 1 kann daher mit seiner Isolierung 3 von außen in das Innengewinde 8 der Durchlassbuchse 9 eingeschraubt werden. Nachdem die ersten Gewindegänge sich in den Außendurchmesser der Isolierung 3 eingegraben habe, ist bereits ein mit weiterem Einschrauben zunehmender Formschluss zwischen beiden Teilen hergestellt, der nur mit sehr großem Kraftaufwand ein Zurückziehen oder auch ein Vorwärtsschieben erlaubt, so dass die kraftsparendste Einbringrichtung das Einschrauben ist, vorzugsweise bis das vordere Ende der Isolierung das Innengewinde 8 gerade vollständig durchlaufen hat.

Sofern das Kabel 1 eine elektromagnetische Abschirmung 4 in Form eines Metalldrahtgeflechtes nahe des Außenumfanges innerhalb der Isolierung 3 und damit konzentrisch um die Adern 2 herum aufweisen, und insbesondere diese Abschirmung des Kabels auch aufrechterhalten werden soll, so wird die Abschirmung 4 zusammen mit den Adern 2 abgelängt, und steht damit aus der kürzer abgelängten Isolierung 3 vor.

Vor dem Einbringen des Kabels 1 in das Innengewinde 7 wird diese Abschirmung 4 - wie in der rechten Bildhälfte dargestellt - nach hinten umgelegt und damit auf dem Außendurchmesser des Kabels 1 abgelegt, und gerät beim Einschrauben bzw. Einschieben zwischen das Innengewinde 8 und die Isolierung 3. Sofern das Innengewinde 8 aus elektrisch leitendem Material, insbesondere Metall, besteht, und vorzugsweise der ganze Deckel 15, wird auf diese Art und Weise das Kabel 1 EMV-dicht an den Deckel 15 und damit das Gehäuse des elektrischen Gerätes angelassen.

Für die beschriebene zugentlastete Kabeldurchführung ist außer der Durchlassbuchse 9 selbst kein weiteres Bauteil notwendig, nicht einmal eine zusätzliche Befestigungsschraube für die Kabelbefestigung, und die Montage erfolgt ebenso schnell wie das Festziehen einer nur einzigen Befestigungsschraube.

Fig. 1 zeigt ferner in der rechten Bildhälfte eine vorzugsweise über den gesamten Umfang vorhandene Raupe aus einem ausgehärteten Kleber oder einer ausgehärteten Vergussmasse 14, im Eckbereich zwischen der freien Stirnfläche der Isolierung 3 des Kabels und dem Innenumfang der Durchlassbuchse 9. Hierzu ist das Kabel 1 nur soweit durch das Innengewinde 8 vorwärts gesteckt bzw. vorwärts geschraubt, dass der Innendurchmesser der Durchlassbuchse 9 noch nahe an den Außendurchmesser 5 des Kabels 1 heranreicht. Der Kleber/die Vergussmasse 14' kann sich auch über die gesamte Stirnfläche des Kabels 1 bis zur Durchlassbuchse 9 hin erstrecken.

Diese Verklebung dient einer Verbesserung der Zugbelastbarkeit des Kabels 1, die dadurch nicht nur von dem formschlüssigen Eingriff der Gewindegänge des Innengewindes 8 in die Isolierung 3 des Kabels bedingt wird, sondern zusätzlich auch durch die Verklebung zwischen Durchlassbuchse 9 und Isolierung 3, und auch der Abschirmung 4, sofern diese ebenfalls durch diesen Verguss 14 hindurchführt und von diesem mitverklebt bzw. vergossen ist.

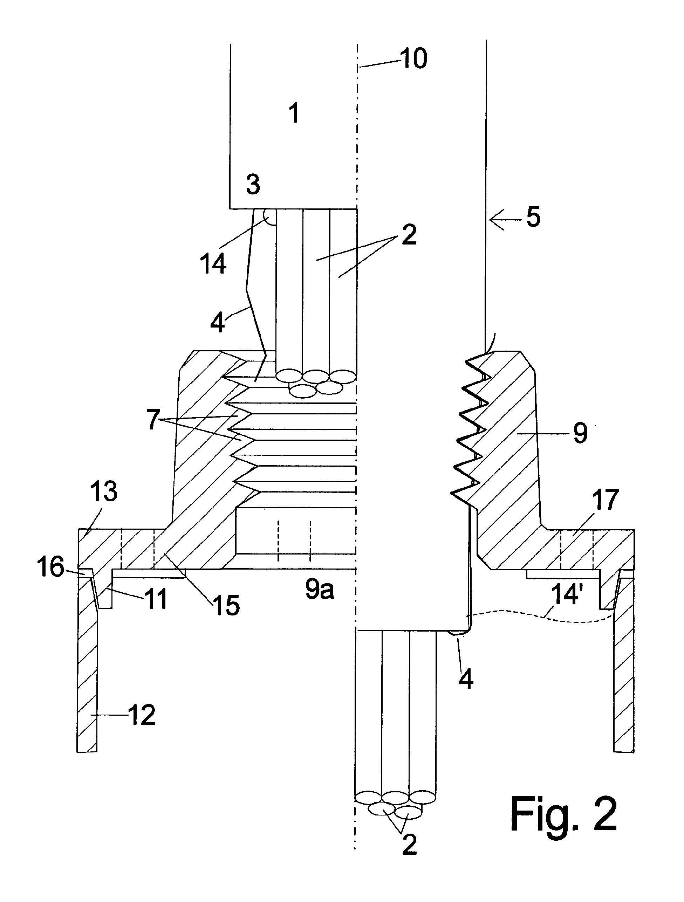

Fig. 2 unterscheidet sich von Fig. 1 dadurch, dass der Durchlass 9a einschließlich des Innengewindes 8 konisch ausgebildet ist, also in Einschraubrichtung des Kabels 1 einen verjüngenden Querschnitt besitzt, wodurch das Einschrauben des Kabels 1 erleichtert wird, indem die ersten Gewindegänge einfach und zuverlässig auf den Außendurchmesser am Beginn des Kabels aufschraubbar sind.

Dies wird insbesondere erleichtert, indem der Außendurchmesser 5 des Kabels 1 größer ist als der freie Durchlass am zweiten, freien Ende des Durchlasses, jedoch größer als der freie Durchlass, insbesondere auch größer als der Innendurchmesser N, am inneren, schmalen Ende des Durchlasses.

Fig. 2 unterscheidet sich ferner von Fig. 1 auch dadurch, dass ein Verguss 14' nicht nur als einzelne Kleberraupe aufgebracht ist, sondern das Gehäuse 12, auf welchem der Deckel 15 mit der Durchlassbuchse 9 aufgesetzt ist, im Wesentlichen vollständig ausfüllt. Um dies nach Aufsetzen des Deckels 15 bewerkstelligen zu können, sind im Deckel 15, vorzugsweise auf gegenüberliegenden Seiten bezüglich der Durchlassbuchse 9 wenigstens zwei Öffnungen 17 vorhanden, von denen nach Aufsetzen des Deckels 15 die eine zum Einfüllen der Vergussmasse 14' dient und die andere zum Austreten der dadurch verdrängten Luft im Inneren des Gehäuses.

Um die Zugbelastbarkeit des Kabels 1 weiter zu verbessern, wird in diesem Fall das Kabel 1 so weit in die Durchlassbuchse 9 hinein und durch diese hindurchgeschraubt, dass das Kabel 1 mit seiner Isolierung 3 und damit auch mit der daraus ggf. stirnseitig austretenden und nach hinten umgelegten Abschirmung 4 in den Vergussbereich hineinragt und mit vergossen wird. Vor allem das Vergießen der meist gewebeartig oder geflechtartig ausgeführten Abschirmung 4 ergibt dabei eine starke, formschlüssige und auch kraftschlüssige Verbindung des Kabels 1 mit der Vergussmasse 14' und damit dem Gehäuse oder Profil fest verbunden ist.

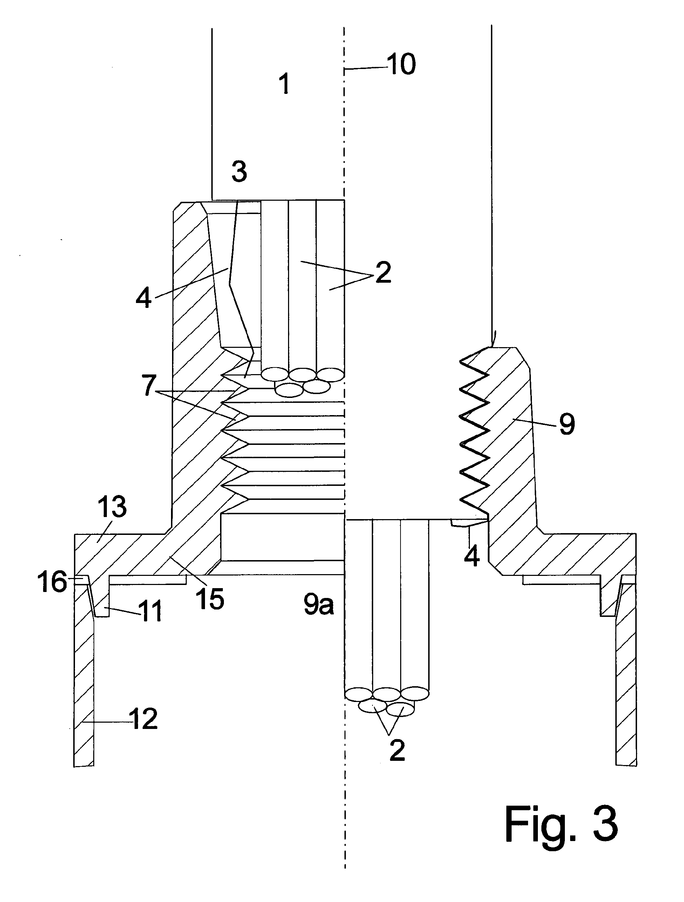

Bei Fig. 3 ist das Innengewinde 7 über die gesamte Länge mit einem gleichmäßigen Durchmesser ausgestaltet, wie bei der Lösung gemäß Fig. 1, jedoch ist in Einbringrichtung des Kabels 1 dem Innengewinde 7 ein Zuführstutzen 6, insbesondere einstückig zusammen mit der Durchlassbuchse 9 ausgebildet, vorgelagert.

Der Innendurchmesser des Zuführstutzens 6 ist konisch verengend zum Innengewinde 8 hin ausgebildet, wobei der Außendurchmesser 4 des Kabels kleiner ist als der Innendurchmesser des Zuführstutzens 6 an seinem freien, offenen Ende, jedoch größer als zumindest der freie Durchlass des Innengewindes 8, vorzugsweise auch größer als der Innendurchmesser N des Innengewindes 8.

### BEZUGSZEICHENLISTE

- 1: Kabel
- 2a, b: Adern
- 3: Isolierung
- 4: Abschirmung
- 5: Außendurchmesser
- 6: Zuführstutzen
- 7: Gewindegang
- 8: Innengewinde
- 9: Durchlassbuchse
- 9a: Durchlass
- 10: Längsrichtung
- 11: Führungsfortsatz
- 12: Profil
- 13: Verschraubung
- 14: Verguss
- 15: Deckel
- 16: Dichtung
- N: Nenndurchmesser

## Patentansprüche

1. Zugentlastete Kabeldurchführung mit
- einem elektrischen Kabel (1),
- einer Durchlassbuchse (9) mit einem Durchlass (9a) für das Kabel (1),
**dadurch gekennzeichnet, dass**
der Durchlass (9a) ein Innengewinde (8) aufweist und das Kabel (1) einen solchen Außendurchmesser (5) aufweist, dass die Gewindegänge (7) des Innengewindes (8) in dem in das Innengewinde (8) eingeschraubten Zustand des Kabels (1) sich formschlüssig in den Außenumfang dessen Isolierung (3) einpressen.

2. Zugentlastete Kabeldurchführung nach Anspruch 1,
**dadurch gekennzeichnet, dass**
der Außendurchmesser (5) des Kabels (1) im Ausgangszustand größer ist als der Innengewindedurchmesser (N) gemessen zwischen den Vertiefungen zwischen den Gewindegängen (7).

3. Zugentlastete Kabeldurchführung nach einem der vorhergehenden Ansprüche,
**dadurch gekennzeichnet, dass**
von der Einschraubseite des Innengewindes (8) her ein Zuführstutzen (6) vorgeordnet ist, mit einem zum Innengewinde (8) hin abnehmenden, insbesondere konischen, Innendurchmesser, und der Innendurchmesser am größeren freien Ende größer und am inneren, schmalen Ende geringer ist als der Außendurchmesser (5) des Kabels (1) im Ausgangszustand.

4. Zugentlastete Kabeldurchführung nach einem der vorhergehenden Ansprüche,
**dadurch gekennzeichnet, dass**
der Innendurchmesser des Zuführstutzens (6) am inneren, schmaleren Ende dem Durchmesser des Innengewindes (8) zwischen den Gewindegängen (7) entspricht.

5. Zugentlastete Kabeldurchführung nach einem der vorhergehenden Ansprüche,
**dadurch gekennzeichnet, dass**
das Kabel (1) eine metallene Abschirmung (4) zwischen den Adern (2) und dem Außendurchmesser (5) aufweist und die Abschirmung (4) über das freie Ende des Kabels vorstehend nach hinten umgebogen auf dem Außendurchmesser des Kabels (1) liegt und damit zwischen dem Innengewinde (8) der Durchlassbuchse (9) und der Isolierung (3) des Kabels (1).

6. Zugentlastete Kabeldurchführung nach einem der vorhergehenden Ansprüche,
**dadurch gekennzeichnet, dass**
die nach hinten umgebogene Abschirmung (4) eine axiale Erstreckung wenigstens entsprechend der axialen Länge des Innengewindes (8) aufweist.

7. Zugentlastete Kabeldurchführung nach einem der vorhergehenden Ansprüche,
**dadurch gekennzeichnet, dass**
die Isolierung (3) des Kabels (1) dicker ist als die Höhe der Gewindegänge (7).

8. Zugentlastete Kabeldurchführung nach einem der vorhergehenden Ansprüche,
**dadurch gekennzeichnet, dass**
der Außendurchmesser des Kabels (1) im entlasteten Zustand nicht mehr als 20%, insbesondere nicht mehr als 10%, insbesondere nicht mehr als 5% größer ist als der Nenndurchmesser (N) des Innengewindes (8).

9. Zugentlastete Kabeldurchführung nach einem der vorhergehenden Ansprüche,
**dadurch gekennzeichnet, dass**
die Durchlassbuchse (9) ein Blechteil, insbesondere hergestellt als Stanzteil, ist und das Innengewinde (8) als Gewindedüse hergestellt ist.

10. Zugentlastete Kabeldurchführung nach einem der vorhergehenden Ansprüche,
**dadurch gekennzeichnet, dass**
das Innengewinde (8), insbesondere die gesamte Durchlassbuchse (9), aus elektrisch leitendem Material, insbesondere aus Metall, besteht.

11. Zugentlastete Kabeldurchführung nach einem der vorhergehenden Ansprüche,
**dadurch gekennzeichnet, dass**
ein Kleber bzw. eine Vergussmasse (14), insbesondere als ringförmiger Auftrag, so angeordnet ist, dass sie sowohl die Stirnseite der Isolierung (13) des Kabels (1) sowie dem Innenumfang des Durchlasses (9a) verklebt ist.

12. Zugentlastete Kabeldurchführung nach einem der vorhergehenden Ansprüche,
**dadurch gekennzeichnet, dass**
der Kleber bzw. der Verguss (14) auch die Abschirmung (4) des Kabels (1) wenigstens teilweise mit einschließt, insbesondere im Bereich zwischen dem Austritt der Abschirmung (4) aus der Stirnseite der Isolierung (3) und dem Eintritt der Abschirmung (4) in das Innengewinde (8).

13. Zugentlastete Kabeldurchführung nach einem der vorhergehenden Ansprüche,
**dadurch gekennzeichnet, dass**
das Kabel (1) so weit in das Innengewinde (8) der Durchlassbuchse (9) eingeschraubt ist, dass es auf deren Innenseite axial vorsteht und in das angrenzende Gehäuse hineinragt und wenigstens mit seiner Abschirmung (4), insbesondere auch mit der Isolierung (3) des Kabels (1) von einem im Gehäuse vorhandenen Verguss (14') umschlossen ist.
